# EUROPÄISCHE PATENTANMELDUNG

(11) **EP 3 001 154 A1**
(43) Veröffentlichungstag der Anmeldung: **30.03.2016**
(21) Anmeldenummer: 15184554.2
(22) Anmeldetag: 09.09.2015
(51) Int. Cl.: G01F 1/684

(54) **LUFTMASSENMESSER MIT EINER KUNSTSTOFFBESCHICHTUNG**

(30) Priorität: 26.09.2014 DE 102014219541
(71) Anmelder: Continental Automotive GmbH, 30165 Hannover (DE)
(72) Erfinder: Knittel, Thorsten, 93080 Pentling (DE); Setescak, Stephen, 93080 Pentling (DE)

(57) **Zusammenfassung**

Die Erfindung betrifft einen Luftmassenmesser (2) mit einem Sensorelement (15), wobei sich ein zu messender Luftmassenstrom (10) über das Sensorelement (15) hinweg bewegt, und wobei das Sensorelement (15) als mikroelektromechanisches System ausgebildet ist, das eine Membran (17) aufweist, wobei die Membran (17) in ihrem Randbereich (23) mit einem Substrat (24) verbunden ist, und wobei auf der Membran (17) ein Heizelement (12) ausgebildet ist, und wobei in Richtung des Luftmassenstromes (10) vor und hinter dem Heizelement (12) jeweils ein Temperatursensorelement (7, 8) angeordnet ist.

Um die Verfälschung der Messergebnisse durch die Verschmutzung des Sensorelementes zu beseitigen oder zumindest in engen Grenzen zu halten, ist im Randbereich (23) der Membran (17) eine Kunststoffbeschichtung (25) auf die Membran (17) aufgebracht.

## Beschreibung

Die Erfindung betrifft einen Luftmassenmesser mit einem Sensorelement, wobei sich ein zu messender Luftmassenstrom über das Sensorelement hinweg bewegt, und wobei das Sensorelement als mikroelektromechanisches System ausgebildet ist, das eine Membran aufweist, wobei die Membran in ihrem Randbereich mit einem Substrat verbunden ist, und wobei auf der Membran ein Heizelement ausgebildet ist, und wobei in Richtung des Luftmassenstromes vor und hinter dem Heizelement jeweils ein Temperatursensorelement angeordnet ist.

Derartige Luftmassenmesser werden beispielsweise in Kraftfahrzeugen zur Ermittlung der von einer Brennkraftmaschine angesaugten Luftmasse verwendet. Auf der Basis einer möglichst zuverlässigen Information über eine angesaugte Luftmasse kann eine Verbrennung durch eine elektronische Steuerung der Brennkraftmaschine dahingehend optimiert werden, dass eine genau auf die Luftmasse abgestimmte Kraftstoffmenge den jeweiligen Brennräumen zugeführt wird. Als Ergebnis wird dadurch eine bessere Energieausnutzung bei verringertem Schadstoffausstoß erzielt.

Aus der DE 44 07 209 A1 ist ein Luftmassenmesser bekannt, der in einen Ansaugkanal zur Bestimmung einer Luftmasse eingesteckt wird, wobei ein definierter Anteil der Gesamtströmung den Luftmassensensor durchströmt. Hierzu ist dieser als Einsteckkanal-Luftmassenmesser ausgebildet. Der Luftmassenmesser umfasst ein in einem Messkanal angeordnetes Sensorelement, eine in einem Gehäuse angeordnete Elektronik zur Auswertung und/oder Erfassung der Messwerte des Sensorelementes sowie einen Auslasskanal jenseits des Sensorelements. Für eine platzsparende Anordnung werden die genannten Kanäle bzw. Luftführungswege U-, S- oder C-förmig ausgebildet, so dass eine insgesamt kompakte, als Einsteckelement ausgebildete, Vorrichtung gebildet wird. Ein gemäß der Lehre der WO 03/089884 A1 ausgebildeter Luftmassenmesser, der als Heißfilmanemometer ausgebildet ist, hat sich prinzipiell bewährt.

Bei der Entwicklung moderner Luftmassenmesser, die auf der Grundlage von Sensorelementen arbeiten, die als mikroelektromechanische Systeme (MEMS) ausgebildet sind, hat sich herausgestellt, dass die Messergebnisse der Sensorelemente besonders von Verschmutzungen nachteilig beeinflusst werden. Durch die Verschmutzung, die zum Beispiel von Öltröpfchen im Luftmassenstrom hervorgerufen werden kann, entsteht im Sensorelement über die Zeit eine Signaldrift, die zu falschen Messwerten für den Luftmassenstrom führen kann. Als mikroelektromechanische Systeme ausgebildete Sensorelemente besitzen jedoch eine Vielzahl von Vorteilen, auf die nicht verzichtet werden soll, und daher ist es eine Aufgabe der Erfindung, die Verfälschung der Messergebnisse durch die Verschmutzung des Sensorelementes zu beseitigen oder zumindest in engen Grenzen zu halten.

Diese Aufgabe wird durch die Merkmale des unabhängigen Anspruchs gelöst. Vorteilhafte Ausführungsformen sind Gegenstand der abhängigen Ansprüche.

Erfindungsgemäß ist im Randbereich der Membran eine Kunststoffbeschichtung auf die Membran aufgebracht. Diese Kunststoffbeschichtung verhindert die Ablagerung von Verschmutzungen auf dem Sensorelement. Sollten sich dennoch Verschmutzungen auf dem Sensorelement ablagern, sind deren negative Auswirkungen auf das Messergebnis wesentlich geringer als bei Sensorelementen ohne diese Kunststoffbeschichtung. Damit bleiben die Messergebnisse des Luftmassenmessers über eine lange Zeit stabil, und eine zyklische Rekalibration des Luftmassenmessers kann entfallen. Derartige Sensorelemente liefern hervorragende Messergebnisse, da die dünne Membran kaum thermisch leitfähig ist, und somit allein die thermische Leitfähigkeit der vorbeiströmenden Luftmasse die Messergebnisse bestimmt.

Bei einer Weiterbildung wird ein zweites Temperatursensorelement durch die elektrische Verschaltung jeweils eines Messwiderstandes mit mindestens zwei Vergleichswiderständen gebildet. Diese Kombination von Mess- und Vergleichswiederständen liefert sehr gute Messergebnisse.

Bei einer Ausgestaltung sind die Widerstandswerte der einzelnen Messwiderstände deutlich größer als die Widerstandswerte der einzelnen Vergleichswiderstände. Insbesondere ist es vorteilhaft, wenn die Widerstandswerte der einzelnen Messwiderstände mindestens um den Faktor 10 größer als die Widerstandswerte der einzelnen Vergleichswiderstände sind. Eine derartige Wahl der Widerstandswerte führt zu sehr guten und hervorragend reproduzierbaren Messergebnissen für den Luftmassenstrom.

Bei einer Weiterbildung der Erfindung sind die Vergleichswiderstände im Randbereich der Membran angeordnet. Dadurch wirkt sich die besonders starke Schmutzablagerung im Randbereich der Membran kaum auf die Messergebnisse des Luftmassenmessers aus.

Bei einer nächsten Weiterbildung der Erfindung sind die Messwiderstände im inneren Bereich der Membran angeordnet. Damit werden die Messwiderstände von der Verschmutzung des Messelementes, die vor allem im Randbereich der Membran auftritt, nicht betroffen, was ebenfalls zur Stabilität der Messergebnisse beiträgt.

Darüber hinaus ist es vorteilhaft, wenn die Kunststoffbeschichtung aus Polyimid besteht.

Weitere Merkmale und Vorteile der Erfindung werden nachfolgend unter Beschreibung von Ausführungsbeispielen mit Bezugnahme auf die Abbildungen der Zeichnung angegeben. Über die verschiedenen Abbildungen hinweg werden nachfolgend gleiche Begriffe und Bezugszeichen für gleiche Bauelemente verwendet werden. Dabei zeigt:
- Figur 1: einen Luftmassenmesser,
- Figur 2: ein als mikroelektromechanisches System (MEMS) ausgebildetes Sensorelement,
- Figur 3: ein als mikroelektromechanisches System (MEMS) ausgebildetes Sensorelement, das in einem Hilfsrohr des Luftmassenmessers angeordnet ist,
- Figur 4: eine Situation, bei der der Luftmassenstrom durch die Einlassöffnung in das Hilfsrohr des Luftmassenmessers einströmt,
- Figur 5: das als mikroelektromechanisches System (MEMS) ausgebildete Sensorelement in einem Luftmassenmesser, der als Einsteckfinger in einem Ansaugrohr integriert ist,
- Figur 6: das Sensorelement mit dem ersten Temperatursensorelement und dem zweiten Temperatursensorelement,
- Figur 7: eine mögliche elektrische Verschaltung der Widerstände,
- Figur 8: das aus Figur 7 bekannte Sensorelement mit einer Kunststoffbeschichtung auf der Membran,
- Figur 9: eine weitere Ausgestaltung des erfindungsgemäßen Luftmassenmessers,
- Figur 10: eine fensterrahmenförmige Kunststoffbeschichtung auf dem Substrat.

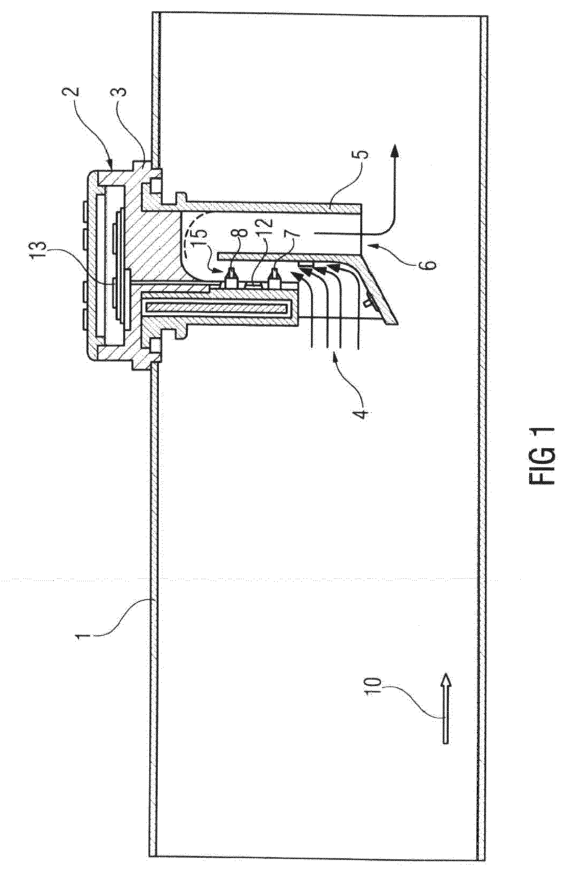

Figur 1 zeigt einen Luftmassenmesser 2. Der Luftmassenmesser 2 ist in diesem Beispiel als Einsteckfinger ausgebildet, der in ein Ansaugrohr 1 eingesteckt wird und mit dem Ansaugrohr fest verbunden wird. Das Ansaugrohr 1 führt einen Luftmassenstrom 10 hin zu den Zylindern einer Brennkraftmaschine. Zur effizienten Verbrennung des Treibstoffes in den Zylindern einer Brennkraftmaschine ist es notwendig, eine genaue Information über die zur Verbrennung zur Verfügung stehende Luftmasse zu erhalten. Anhand der zur Verfügung stehenden Luftmasse kann auf den verfügbaren Sauerstoff geschlossen werden, der zur Verbrennung des in die Zylinder eingespritzten Kraftstoffes notwendig ist. Darüber hinaus zeigt der Luftmassenmesser 2 in Figur 1 ein erstes Temperatursensorelement 7 und ein zweites Temperatursensorelement 8. Das erste Temperatursensorelement 7 und das zweite Temperatursensorelement 8 sind an unterschiedlichen Orten angeordnet. Die Temperatursensorelemente 7, 8 werden in der Regel aus Widerständen oder Thermopiles gebildet, die entsprechend der am Temperatursensorelement herrschenden Temperatur unterschiedliche Widerstandswerte annehmen. Zwischen dem ersten Temperatursensorelement 7 und dem zweiten Temperatursensorelement 8 ist ein Heizelement 12 ausgebildet. Der Luftmassenstrom 10, der durch die Einlassöffnung 4 in das Gehäuse 3 des Luftmassenmessers 2 eintritt, überströmt zunächst das erste Temperatursensorelement 7 und dann das Heizelement 12, wonach der Luftmassenstrom 10 das zweite Temperatursensorelement 8 erreicht und entlang des Hilfsrohres 5 zur Auslassöffnung 6 des Luftmassenmessers 2 geleitet wird. Der Luftmassenstrom 10 erreicht das erste Temperatursensorelement 7 mit einer bestimmten Temperatur. Diese Temperatur wird vom ersten Temperatursensorelement 7 erfasst. Danach überstreicht der Luftmassenstrom 10 das Heizelement 12, wobei der Luftmassenstrom 10 je nach vorbeiströmender Masse mehr oder weniger aufgeheizt wird. Wenn der aufgeheizte Luftmassenstrom 10 das zweite Temperatursensorelement 8 erreicht, wird die nun vorliegende Temperatur des Luftmassenstroms 10 mit dem zweiten Temperatursensorelement 8 bestimmt. Aus der Differenz der vom ersten Temperatursensorelement 7 und vom zweiten Temperatursensorelement 8 gemessenen Temperaturen kann die vorbeigeströmte Luftmasse bestimmt werden. Dazu kann der Luftmassenmesser 2 selber eine Auswerteelektronik 13 enthalten, die die Messsignale des ersten Temperatursensorelementes 7 und des zweiten Temperatursensorelementes 8 auswertet. Die so gewonnene Information über den Luftmassenstrom 10 wird an eine hier nicht dargestellte Motorsteuerung weitergeleitet.

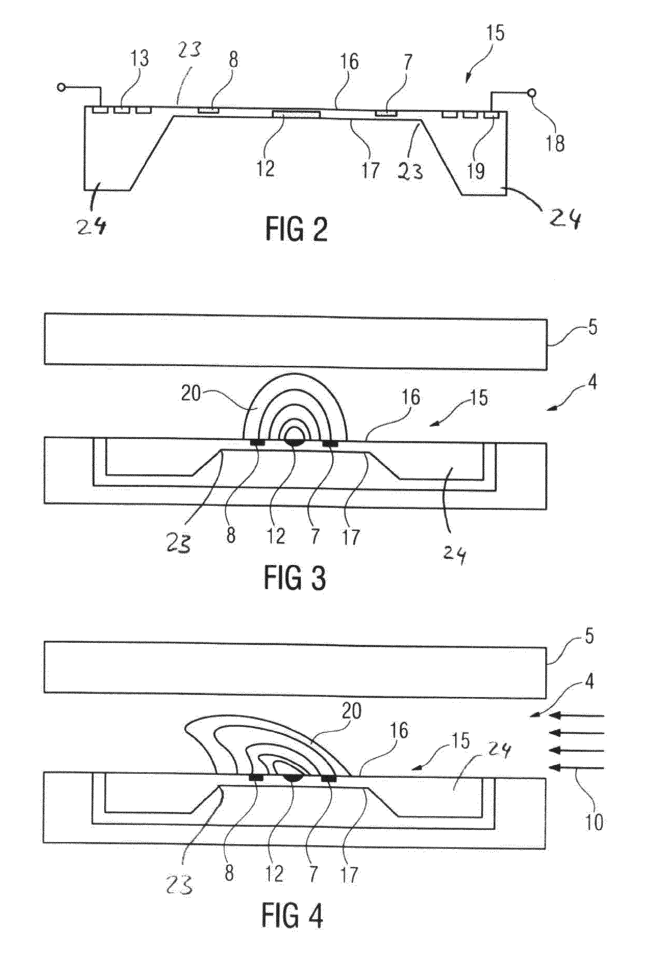

Figur 2 zeigt ein Sensorelement 15 für einen Luftmassenmesser 1. Das Sensorelement 15 ist als mikroelektromechanisches System (MEMS) auf einem einzigen Silizium-Chip ausgebildet. Das Sensorelement 15 arbeitet nach dem Differenztemperaturverfahren, womit die Masse der vorbeiströmenden Luftmenge 10 bestimmt wird. Hierzu sind auf einer dünnen Membran 17 ein erstes Temperatursensorelement 7 und ein zweites Temperatursensorelement 8 ausgebildet. Das erste und das zweite Temperatursensorelement 7, 8 befinden sich an unterschiedlichen Orten auf der Oberfläche 16 der Membran 17. Zwischen dem ersten Temperatursensorelement 7 und dem zweiten Temperatursensorelement 8 ist ein Heizelement 12 angeordnet. Auf dem als mikroelektromechanisches System aufgebauten Sensorelement 15 ist zudem eine Auswerteelektronik 13 integriert, die die Messsignale der Temperatursensorelemente 7, 8 sofort auswerten und in ein Signal, das proportional zum Luftmassenstrom 10 ist, umwandeln kann. Die Auswerteelektronik 13 kann jedoch auch in einem nachgeschalteten elektronischen Gerät integriert sein. Die Informationen über den Luftmassenstrom 10 werden dann über Anschlusspads 19 und Anschlussdrähte 18 an eine hier nicht dargestellte nachfolgende Motorelektrosteuerung weitergeleitet. Das Sensorelement 15 ist auf einem Substrat 24 aufgebaut, wobei eine dünne Membran 17 in ihrem Randbereich 23 mit dem Substrat mechanisch verbunden ist.

In Figur 3 wird ein als mikroelektromechanisches System (MEMS) ausgebildetes Sensorelement 15 für einen Luftmassenmesser 2 gezeigt, das auf einem einzigen Substrat 24 ausgebildet ist, wobei das Substrat 24 in einem Hilfsrohr 5 des Luftmassenmessers 2 angeordnet ist. In Figur 3 strömt durch die Einlassöffnung 4 kein Luftmassenstrom 10, was zum Beispiel bei ausgestellter Brennraftmaschine der Fall sein wird. Wenn das Heizelement 12 auf dem Sensorelement 15 mit elektrischer Energie versorgt wird, entsteht um das Heizelement 12 die hier dargestellte symmetrische Temperaturverteilung 20. Damit misst das erste Temperatursensorelement 7 und das zweite Temperatursensorelement 8 die gleiche Temperatur, und nach der Differenzbildung der Temperaturmesssignale der Temperatursensorelemente 7, 8 wird von der Auswerteelektronik 13 erkannt, dass kein Luftmassenstrom 10 im Hilfsrohr 5 des Luftmassenmessers 2 vorliegt.

Figur 4 zeigt eine Situation, bei der ein Luftmassenstrom 10 durch die Einlassöffnung 4 in das Hilfsrohr 5 des Luftmassenmessers 2 einströmt. Die Temperaturverteilung 20 um das Heizelement 12 wird nun deutlich sichtbar in Richtung des zweiten Temperatursensorelementes 8 verschoben. Damit misst das zweite Temperatursensorelement 8 eine deutlich höhere Temperatur als das erste Temperatursensorelement 7. Durch die Feststellung der Differenztemperatur der beiden Temperatursensorelemente 7, 8 in der Auswerteelektronik 13 lässt sich nun der Luftmassenstrom 10 bestimmen. Die Summe der Temperaturen reagiert ebenfalls auf den Massenstrom 10. Darüber hinaus reagiert jedoch die Summe der Temperaturen auch auf die thermischen Eigenschaften der Luftmasse, wie zum Beispiel die Wärmekapazität und/oder die thermische Leitfähigkeit des vorbeiströmenden Luftmassenstromes 10. Erhöht sich zum Beispiel bei gleichem Luftmassenstrom 10 die thermische Leitfähigkeit der Luftmasse, so kühlt das System ab, und die Summe der Temperaturen wird deutlich geringer. Die Differenztemperatur des ersten Temperatursensorelementes 7 und des zweiten Temperatursensorelementes 8 bleibt jedoch in erster Näherung unverändert. Somit kann durch das Summensignal des ersten Temperatursensorelementes 7 und des zweiten Temperatursensorelementes 8 eine Änderung der thermischen Eigenschaften, wie zum Beispiel der Wärmekapazität, oder der thermischen Leitfähigkeit der Luftmasse gemessen werden. Verrechnet man nun das Differenztemperatursignal mit dem Summentemperatursignal, kann auf die veränderte thermische Leitfähigkeit und/oder die veränderte Wärmekapazität der vorbeiströmenden Luftmasse geschlossen werden.

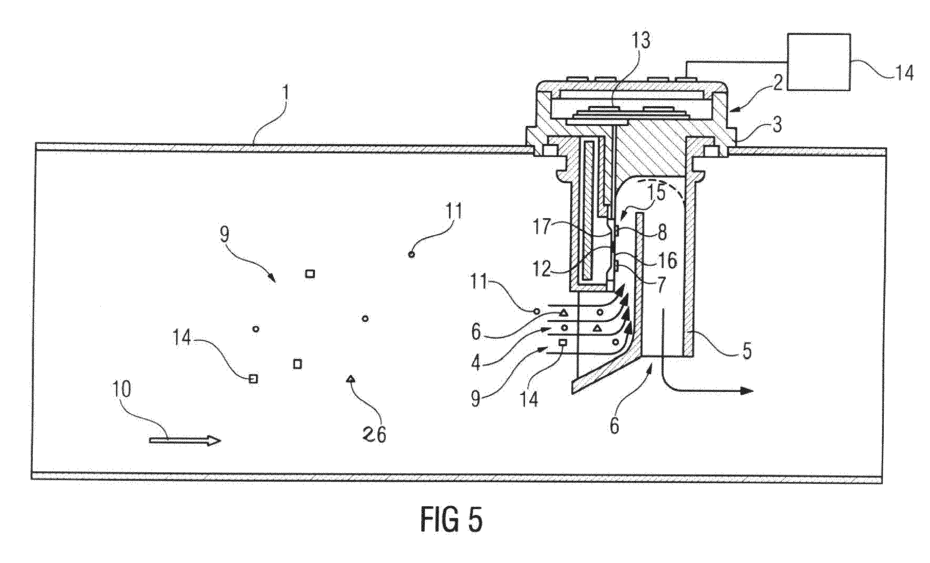

Figur 5 zeigt das Luftmassensensorelement 15, das als mikroelektromechanisches System (MEMS) ausgebildet ist, in einem Luftmassenmesser 2, der als Einsteckfinger in einem Ansaugrohr 1 integriert ist. Der Luftmassenstrom 10 erreicht auch hier die Einlassöffnung 4 und tritt in das Hilfsrohr 5 ein. Auf der Oberfläche 16 der Membran 17 sind das erste Temperatursensorelement 7 und das zweite Temperatursensorelement 8 zu erkennen. Zwischen dem ersten Temperatursensorelement 7 und dem zweiten Temperatursensorelement 8 ist das Heizelement 12 angeordnet. Der Luftmassenstrom 10 erreicht zunächst das erste Temperatursensorelement 7, überströmt dann das Heizelement 12, um danach das zweite Temperatursensorelement 8 zu erreichen.

In Figur 5 ist zu erkennen, dass der Luftmassenstrom 10 auch Verschmutzungen 9 beinhaltet. Mit dem Luftmassenstrom 10 werden zum Beispiel Wassertröpfchen 26, Öltröpfchen 11 und/oder Staubteilchen 14 hin zum Luftmassenmesser 2 transportiert. Diese Verschmutzungen 9 gelangen durch die Einlassöffnung 4 des Luftmassenmessers 2 bis zum Sensorelement 15. Wenn sich die Verschmutzungen 9 im Bereich des ersten Temperatursensorelementes 7 und des zweite Temperatursensorelementes 8 ablagern, kann es mit der Zeit zu einer massiven Verfälschung des Messwertes für den Luftmassenstrom 10 kommen. Da sich diese Verfälschung durch die Akkumulation der Verschmutzung auf dem Sensorelement 15 über einem langen Zeitraum immer weiter aufbaut, spricht man in diesem Zusammenhang auch von einer Signaldrift des Luftmassenmessers 2. Diese Signaldrift ist unerwünscht, und sie sollte unterdrückt und/oder kompensiert werden.

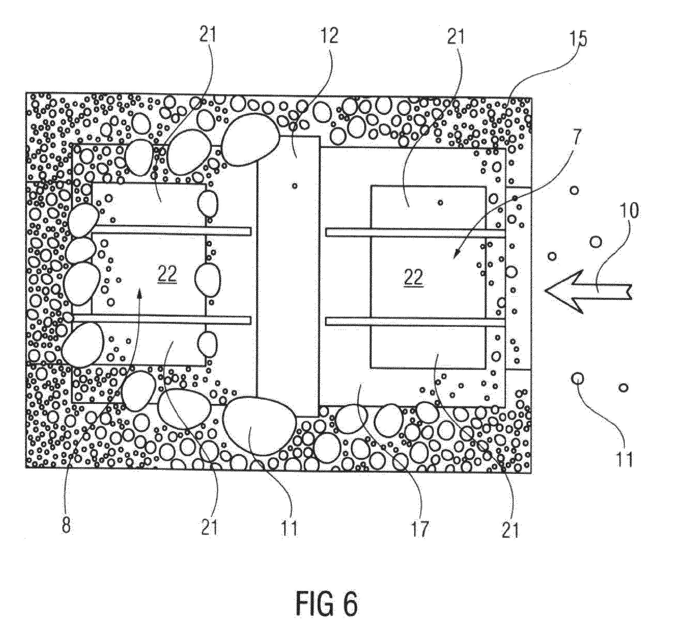

Figur 6 zeigt das Sensorelement 15 mit dem ersten Temperatursensorelement 7 und dem zweiten Temperatursensorelement 8 sowie dem zwischen den Temperatursensorelementen 7 und 8 angeordneten Heizelement 12. Mit dem Pfeil ist die Richtung des Luftmassenstromes 10 dargestellt. Damit befindet sich in der Strömungsrichtung des Luftmassenstromes 10 das erste Temperatursensorelement 7 vor dem Heizelement 12 und das zweite Temperatursensorelement 8 hinter dem Heizelement 12. Sowohl das erste Temperatursensorelement 7 als auch das zweite Temperatursensorelement 8 setzen sich als elektrische Reihenschaltungen aus einem Messwiderstand 22, der zum Beispiel einen großen Widerstandswert aufweist, und mindestens zwei Vergleichswiderständen 21, die zum Beispiel kleine Widerstandswerte aufweisen, zusammen. Es ist zu erkennen, dass die Messwiderstände 22 im inneren Bereich der dünnen Membran angeordnet sind, und die Vergleichswiderstände 21 im Randbereich der Membran 17 angeordnet sind.

Weiterhin zeigt die Figur 6, dass Verschmutzungen 9, und hierbei vornehmlich Öltröpfchen 11, mit dem Massenstrom 10 zu dem Sensorelement 15 transportiert werden. Insbesondere die Öltröpfchen 11 lagern sich auf dem Sensorelement 15 ab. Es ist deutlich zu erkennen, dass die Ablagerung der Öltröpfchen 11 auf dem Sensorelement 15 besonders stark im Bereich der Widerstände erfolgt, die in Strömungsrichtung des Luftmassenstromes 10 dem Heizelement 12 nachgelagert sind. Diese unsymmetrische Ablagerung von Öltröpfchen 11 auf dem Sensorelement 15 führt zu einer Signaldrift, die letztlich zur Verfälschung der vom Sensorelement 15 erfassten Messwerte für den Luftmassenstrom 10 führt. Darüber hinaus erfolgt die Ablagerung der Verschmutzungen bevorzugt im Randbereich der Membran 17.

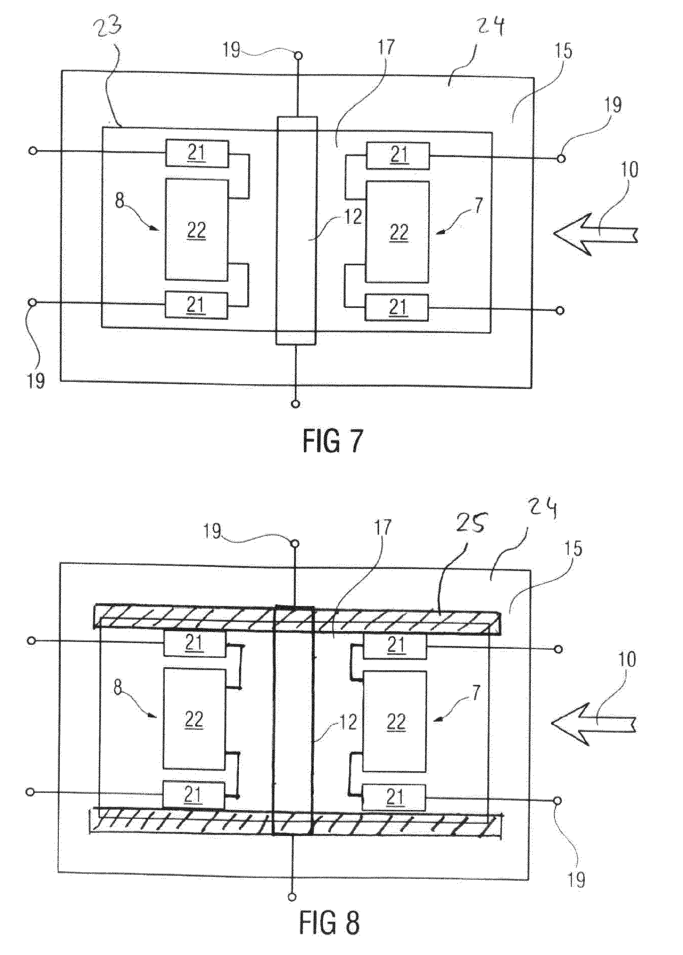

Figur 7 zeigt eine mögliche elektrische Verschaltung der Vergleichswiderstände 21 und der Messwiderstände 22 auf dem Sensorelement 15. Hier wird das erste Sensorelement 7 aus einer Reihenschaltung eines Messwiderstandes 22, der in Richtung des Luftmassenstromes 10 vor dem Heizelement 12 angeordnet ist, und zwei Vergleichswiderständen 21, die ebenfalls in Richtung des Luftmassenstromes 10 vor dem Heizelement 12 angeordnet sind, gebildet. Das zweite Temperatursensorelement 8 wird entsprechend aus einer Reihenschaltung von Widerständen gebildet, wobei der Messwiderstand 22 im Bezug auch die Strömungsrichtung des Luftmassenstromes 10 hinter dem Heizelement 12 angeordnet ist, sowie zwei Vergleichswiderstände 21 ebenfalls in Richtung des Luftmassenstromes 10 hinter dem Heizelement 12 angeordnet sind.

Alle Widerstände sind auf der dünnen Membran 17 angeordnet, wobei die Vergleichswiderstände 21 mit den kleinen Widerstandswerten im Randbereich der Membran 17 zu finden sind, und die Messwiderstände 22 mit den großen Widerstandswerten zentral auf der dünnen Membran 17 angeordnet sind. Unter den Begriffen "kleiner Widerstandswert" und "großer Widerstandswert" ist zu verstehen, dass der Widerstandswert jedes einzelnen Messwiderstandes 22 mindestens zehnmal größer ist als der Widerstandswert eines einzelnen Vergleichswiderstandes 21.

Figur 8 zeigt das aus Figur 7 bekannte Sensorelement 15, bei dem auf einer dünnen Membran 17 mittig ein Heizelement 12 angeordnet ist. Dieses Heizelement 12 kann zum Beispiel als elektrische Widerstandsheizung ausgebildet sein. Das Sensorelement 15 ist als mikroelektromechanisches System ausgebildet, wobei die dünne Membran 17 zum Beispiel hergestellt werden kann, indem ein Siliziumsubstrat entsprechend geätzt wird. Auf diese dünne Membran 17 werden die Vergleichswiderstände 21, die zum Beispiel kleine Widerstandswerte aufweisen können, und die Messwiderstände 22, die zum Beispiel große Widerstandswerte aufweisen können, aufprozessiert. Damit befinden sich auf der dünnen Membran im Ausführungsbeispiel nach Figur 8 zwei Messwiderstände 22 mit großem Widerstandswert und vier Vergleichswiderstände 21 mit kleinen Widerstandswerten sowie ein elektrischer Widerstand, der als Heizelement 12 verwendet wird.

Figur 8 zeigt weiterhin eine erfindungsgemäße Kunststoffbeschichtung 25, die in einem Randbereich 23 des Substrats 24 auf das Substrat 24 aufgebracht ist. Hier ist die Kunststoffbeschichtung 25 streifenförmig ausgebildet, und sie schützt insbesondere die äußeren Bereiche der Vergleichswiderstände 21 vor der Ablagerung von Verschmutzungen 9 aus dem Luftstrom 10.

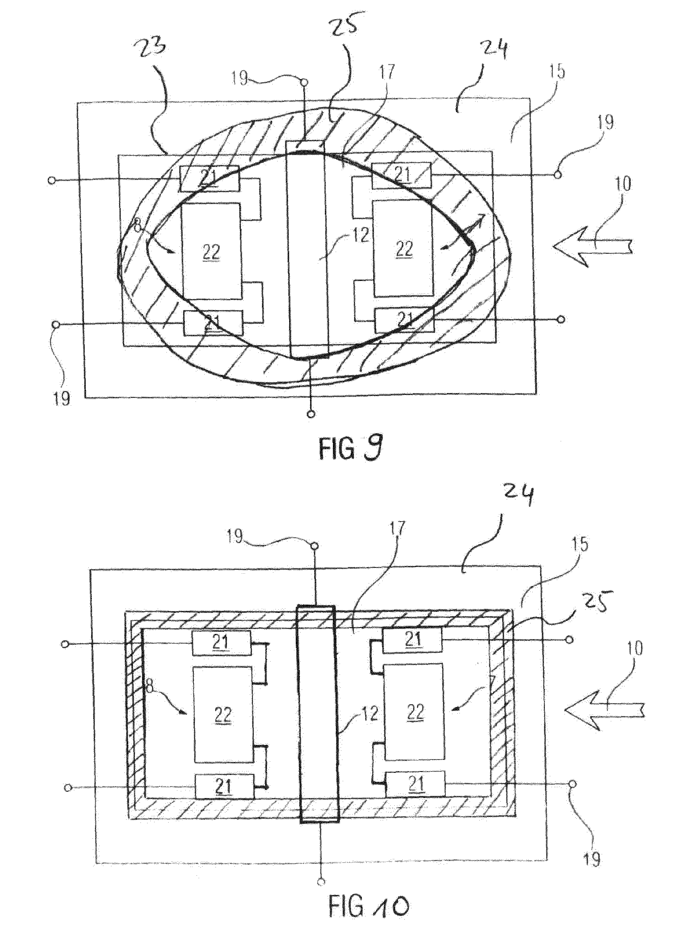

Figur 9 zeigt eine weitere Ausgestaltung des erfindungsgemäßen Luftmassenmessers 2. Das Sensorelement 15 zeigt auf dem Substrat 24 eine ringförmig ausgebildete Kunststoffbeschichtung 25, die im Randbereich 23 der Membran 17 angeordnet ist. Die auf der Oberfläche 16 des Substrates 24 ausgebildete Kunststoffbeschichtung 25 überdeckt Teile der Vergleichswiderstände 21, wobei die Vergleichswiderstände 21 als Thermopiles ausgebildet sein können, deren Messpunkte nicht von der Kunststoffbeschichtung 25 abgedeckt sind.

In Figur 10 ist eine fensterrahmenförmige Kunststoffbeschichtung 25 auf dem Substrat 24 zu erkennen. Die Kunststoffbeschichtung 25 überdeckt wiederum einen Randbereich 23 der Membran 17. Auch durch eine derart ausgebildete Kunststoffbeschichtung 25 kann die Ablagerung von Verschmutzungen 9 auf der Oberfläche 16 des Sensorelementes 15 effektiv verhindert werden.

## Patentansprüche

1. Luftmassenmesser (2) mit einem Sensorelement (15), wobei sich ein zu messender Luftmassenstrom (10) über das Sensorelement (15) hinweg bewegt, und wobei das Sensorelement (15) als mikroelektromechanisches System ausgebildet ist, das eine Membran (17) aufweist, wobei die Membran (17) in ihrem Randbereich (23) mit einem Substrat (24) verbunden ist, und wobei auf der Membran (17) ein Heizelement (12) ausgebildet ist, und wobei in Richtung des Luftmassenstromes (10) vor und hinter dem Heizelement (12) jeweils ein Temperatursensorelement (7, 8) angeordnet ist, **dadurch gekennzeichnet, dass** im Randbereich (23) der Membran (17) eine Kunststoffbeschichtung (25) auf die Membran (17) aufgebracht ist.

2. Luftmassenmesser (2) mit einem Sensorelement (15) nach Anspruch 1, **dadurch gekennzeichnet, dass** ein erstes Temperatursensorelement (7) und ein zweites Temperatursensorelement (8) durch die elektrische Verschaltung jeweils eines Messwiderstandes (22) mit mindestens zwei Vergleichswiderständen (21) gebildet wird.

3. Luftmassenmesser (2) mit einem Sensorelement (15) nach Anspruch 2, **dadurch gekennzeichnet, dass** die Widerstandswerte der einzelnen Messwiderstände (22) mindestens um den Faktor 10 größer als die Widerstandswerte der einzelnen Vergleichswiderstände (21) sind.

4. Luftmassenmesser (2) mit einem Sensorelement (15) nach einem der Ansprüche 1 bis 3, **dadurch gekennzeichnet, dass** die Vergleichswiderstände (21) im Randbereich der Membran (17) angeordnet sind.

5. Luftmassenmesser (2) mit einem Sensorelement (15) nach einem der Ansprüche 1 bis 4, **dadurch gekennzeichnet, dass** die Messwiderstände (22) im inneren Bereich der Membran (17) angeordnet sind.

6. Luftmassenmesser (2) mit einem Sensorelement (15) nach einem der Ansprüche 1 bis 5, **dadurch gekennzeichnet, dass** die Kunststoffbeschichtung (25) aus Polyimid besteht.
